# EUROPÄISCHE PATENTANMELDUNG

(11) **EP 3 261 244 A1**
(43) Veröffentlichungstag der Anmeldung: **27.12.2017**
(21) Anmeldenummer: 16175656.4
(22) Anmeldetag: 22.06.2016
(51) Int. Cl.: H02M 7/487, H02M 7/515, H02M 7/537

(54) **DREIPUNKT-WECHSELRICHTERSCHALTUNG**

(71) Anmelder: Siemens Aktiengesellschaft, 80333 München (DE)
(72) Erfinder: Zaiser, Georg, 91056 Erlangen (DE); Sahan, Benjamin, 30519 Hannover (DE)

(57) **Zusammenfassung**

Die Erfindung betrifft eine Dreipunkt-Wechselrichterschaltung (1) aufweisend zwei gestapelte Halbbrücken (11, 12), wobei ein mittlerer Leistungsanschluss (11m) der ersten Halbbrücke (11) an einen positiven Leistungsanschluss (13p) einer dritten Halbbrücke (13) angeschlossen ist, wobei ein mittlerer Leistungsanschluss (12m) der zweiten Halbbrücke (12) an einen negativen Leistungsanschluss (13n) der dritten Halbbrücke (13) angeschlossen ist und wobei die Halbbrücken (11, 12, 13) jeweils eine erste Halbleiterzelle (H1, H3, H5) und eine zweite Halbleiterzelle (H2, H4, H6) aufweisen. Um im Vergleich zum Stand der Technik eine höhere Robustheit und niedrigere Kosten zu erreichen, wird vorgeschlagen, dass die zweite Halbleiterzelle (H2) der ersten Halbbrücke (11) mindestens einen ersten Thyristor (T1) aufweist und die erste Halbleiterzelle (H3) der zweiten Halbbrücke (12) mindestens einen zweiten Thyristor (T2) aufweist.

## Beschreibung

Die Erfindung betrifft eine Dreipunkt-Wechselrichterschaltung aufweisend zwei gestapelte Halbbrücken wobei ein mittlerer Leistungsanschluss der ersten Halbbrücke an einen positiven Leistungsanschluss einer dritten Halbbrücke angeschlossen ist, wobei ein mittlerer Leistungsanschluss der zweiten Halbbrücke an einen negativen Leistungsanschluss der dritten Halbbrücke angeschlossen ist und wobei die Halbbrücken jeweils eine erste Halbleiterzelle und eine zweite Halbleiterzelle aufweisen.

Die Erfindung betrifft ferner einen Wechselrichter mit mindestens einer derartigen Dreipunkt-Wechselrichterschaltung.

Die Erfindung betrifft darüber hinaus ein Fahrzeug, insbesondere ein Schienenfahrzeug, mit mindestens einem derartigen Wechselrichter.

Die Erfindung betrifft schließlich ein Verfahren zum Ansteuern einer derartigen Dreipunkt-Wechselrichterschaltung.

Ein Wechselrichter ist ein elektrisches Gerät, welches Gleichspannung in Wechselspannung konvertiert. Ein Dreipunkt-Wechselrichter ist in der Lage zwischen einer positiven Spannung, einer negativen Spannung und einer Nullpunktspannung umzuschalten. Durch diese drei Spannungsstufen entstehen weniger Oberwellen im Vergleich zu einem zweistufigen Wechselrichter. Ein Dreipunkt-Wechselrichter ist beispielsweise als Neutral Point Clamped, kurz NPC, oder als Active Neutral Point Clamped, kurz ANPC, Wechselrichter insbesondere mit abschaltbaren Leistungshalbleitern, beispielsweise mit Insulated-Gate Bipolar Transistors, kurz IGBTs, implementiert.

Eine derartige Dreipunkt-Wechselrichterschaltung kommt beispielsweise in Wechselrichtern von elektrischen Schienenfahrzeugen aber auch von Solaranlagen der anderen netzspeisenden Geräten und von Industrieanlagen vor. Insbesondere in Schienenfahrzeugen mit Einzelradantrieb werden bevorzugt einphasige Wechselrichter eingesetzt. Ein einphasiges System weist einen Phasenleiter und einen Nullleiter auf, wobei der Nullleiter bevorzugt geerdet ist.

Die Offenlegungsschrift WO 2011/134092 A2 offenbart eine Schaltung für einen Multilevel-Umrichter, welche aus einem Zwischenkreiskondensator, sowie für jede Phase aus zwei Halbleiterschaltern, zwei Freilaufdioden und zwei Thyristoren besteht. Die zu einer Phase gehörenden Thyristoren aller Zellen sind zusammengeschaltet und bilden den Phasenausgang des Umrichters. Bei jeder Phase ist jeweils ein Thyristor eingeschaltet, welcher so die für diese Phase aktive Zelle auswählt. Um das Umschalten der Thyristoren zu ermöglichen, wird eine zusätzliche Spannungsquelle benötigt.

Die Patentschrift EP 2 557 014 B1 offenbart eine Antriebseinheit für Schienenfahrzeuge mit Einzelrädern, welche jeweils von einem permanentmagneterregten Synchronmotor angetriebenen werden. Jeder Synchronmotor ist mit einem Wechselrichter verbunden.

Der Erfindung liegt die Aufgabe zugrunde, eine Dreipunkt-Wechselrichterschaltung der eingangs genannten Art anzugeben, die, im Vergleich zum Stand der Technik, robuster und kostengünstiger ist.

Diese Aufgabe wird durch eine Dreipunkt-Wechselrichterschaltung gelöst, die zwei gestapelte Halbbrücken aufweist, wobei ein mittlerer Leistungsanschluss der ersten Halbbrücke an einen positiven Leistungsanschluss einer dritten Halbbrücke angeschlossen ist, wobei ein mittlerer Leistungsanschluss der zweiten Halbbrücke an einen negativen Leistungsanschluss der dritten Halbbrücke angeschlossen ist, wobei die Halbbrücken jeweils eine erste Halbleiterzelle und eine zweite Halbleiterzelle aufweisen, wobei die zweite Halbleiterzelle der ersten Halbbrücke mindestens einen ersten Thyristor aufweist und die erste Halbleiterzelle der zweiten Halbbrücke mindestens einen zweiten Thyristor aufweist.

Die Aufgabe wird ferner durch einen Wechselrichter mit mindestens einer derartigen Dreipunkt-Wechselrichterschaltung gelöst.

Darüber hinaus wird die Aufgabe durch ein Fahrzeug, insbesondere ein Schienenfahrzeug, mit mindestens einem derartigen Wechselrichter gelöst.

Die Aufgabe wird schließlich durch ein Verfahren zum Ansteuern einer derartigen Dreipunkt-Wechselrichterschaltung gelöst.

Die in Bezug auf die Dreipunkt-Wechselrichterschaltung nachstehend angeführten Vorteile und bevorzugten Ausgestaltungen lassen sich sinngemäß auf den Wechselrichter, das Fahrzeug und das Verfahren übertragen.

Eine Halbbrücke der Dreipunkt-Wechselrichterschaltung weist zwei Halbleiterzellen auf, wobei die Halbleiterzellen beispielsweise einen abschaltbaren Leistungshalbleiter, insbesondere einen IGBT, oder eine Freilaufdiode aufweisen. Die Halbleiterzellen sind an einem mittleren Leistungsanschluss der Halbbrücke miteinander verbunden. Darüber hinaus ist die erste Halbleiterzelle mit einem positiven Leistungsanschluss der Halbbrücke verbunden und die zweite Halbleiterzelle ist mit einem negativen Leistungsanschluss der Halbbrücke verbunden. Bei dem positiven Leistungsanschluss handelt es sich insbesondere um einen Anschluss für den Pluspol einer Gleichspannungs-Quelle und bei dem negativen Leistungsanschluss um einen Anschluss für den Minuspol einer Versorgungsspannung. Bei zwei gestapelten Halbbrücken ist der negative Leistungsanschluss einer ersten Halbbrücke mit dem positiven Leistungsanschluss einer zweiten Halbbrücke verbunden. Insbesondere sind der positive Leistungsanschluss der ersten Halbbrücke mit dem Pluspol und der negative Leistungsanschluss der zweiten Halbbrücke mit dem Minuspol einer Gleichspannungs-Quelle verbunden.

Ein Thyristor ist ein nicht abschaltbarer Leistungshalbleiter, insbesondere ein Hochstromschalter, welcher über einen Steueranschluss gezündet, das heißt von einem hochohmigen auf einen niederohmigen Zustand umgeschaltet wird. Er bleibt so lange niederohmig, bis ein Durchlassstrom einen Mindestwert, den sogenannten Haltestrom, nicht unterschreitet.

Da die erste Halbleiterzelle der zweiten Halbbrücke und die zweite Halbleiterzelle der ersten Halbbrücke weist Thyristoren auf, da diese Halbleiterzellen langsamer geschaltet werden als die übrigen Halbleiterzellen. Insbesondere werden die Halbleiterzellen mit den Thyristoren mit einer halben Sinusperiode einer Grundfrequenz, welche im Bereich bis 100 Hertz liegt, geschaltet. Die Verwendung von Thyristoren ist vorteilhaft, da ein Thyristor kostengünstiger und robuster als ein abschaltbarer Halbleiter ist. Darüber hinaus kann durch die Sperrung eines Thyristors eine Last, beispielsweise ein Motor, im Fehlerfall schneller vom Wechselrichter abgetrennt werden. Eine derartige Abtrennung erfolgt schneller als eine Abschaltung durch einen mechanischen Schalter. Bei der Abtrennung entstehende Stoßströme werden reduziert.

Bevorzugt weisen die Thyristoren jeweils eine Kathode und eine Anode auf, wobei die Kathode des ersten Thyristors mit der Anode des zweiten Thyristors verbunden ist. Eine derartige Beschaltung hat sich als besonders vorteilhaft erwiesen.

In besonders vorteilhafter Weise weisen die erste Halbleiterzelle der ersten Halbbrücke und die zweite Halbleiterzelle der zweiten Halbbrücke jeweils mindestens einen abschaltbaren Leistungshalbleiter, insbesondere einen IGBT, auf. Ein abschaltbarer Leistungshalbleiter kann durch ein Steuersignal eingeschaltet, insbesondere von einem hochohmigen auf einen niederohmigen Zustand umgeschaltet, und ausgeschaltet, insbesondere von einem niederohmigen auf einen hochohmigen Zustand umgeschaltet werden. Abschaltbare Leistungshalbleiter sind insbesondere Leistungstransistoren, beispielsweise ein IGBT oder ein MOSFET, oder spezielle Thyristoren, beispielsweise ein Integrated Gate-Commutated Thyristor, kurz IGC-Thyristor, oder ein Gate Turn-Off Thyristor, kurz GTO-Thyristor. Die Halbleiterzellen mit den abschaltbaren Leistungshalbleitern werden schneller geschaltet als die Thyristoren. Deren Schaltfrequenzen liegen insbesondere im Kilohertzbereich.

Bei einer weiteren vorteilhaften Ausführungsform weisen die Halbleiterzellen der dritten Halbbrücke jeweils mindestens eine Freilaufdiode auf. Dioden sind in diesem Fall passive Leistungshalbleiter. Durch die Verwendung von Freilaufdioden anstelle von aktiven Leistungshalbleitern im Mittelpunktpfad, lässt sich nur ein Wechselrichterbetrieb realisieren. Die Dioden sind kostengünstiger als aktive Leistungshalbleiter. Darüber hinaus ist der Steuer- und Regelaufwand geringer, da für die Freilaufdioden keine Steuersignale erforderlich sind.

In einer bevorzugten Ausgestaltung weisen die Halbleiterzellen der dritten Halbbrücke jeweils mindestens einen abschaltbaren Leistungshalbleiter, insbesondere einen IGBT, auf. Die dritte Halbbrücke wird auch Mittelpunktpfad genannt. Durch die Verwendung von abschaltbaren Halbleiterbauelementen im Mittelpunktpfad lässt sich neben dem Wechselrichterbetrieb auch ein Gleichrichterbetrieb realisieren.

Bevorzugt sind die abschaltbaren Leistungshalbleiter in Gegenrichtung zu den Halbleiterzellen der ersten Halbbrücke und zu den Halbleiterzellen der zweiten Halbbrücke geschaltet. Durch eine derartige Beschaltung lässt sich, beispielsweise mit Schaltern in den Halbleiterzellen, eine Löschschaltung implementieren, durch welche die Thyristoren der ersten Halbbrücke und der zweiten Halbbrücke abgeschaltet werden können. Eine derartige Löschschaltung ist insbesondere dann erforderlich, wenn der Strom und die Spannung eines sinusförmigen Ausgangssignals nicht in Phase liegen und der jeweilige Thyristor nicht durch einen Stromnulldurchgang des sinusförmigen Ausgangssignals gelöscht wird. Durch eine geeignete Ansteuerung der abschaltbaren Leistungshalbleiter kann ein Stromnulldurchgang und damit ein Abschalten des jeweiligen Thyristors gezielt erreicht werden.

Auf vorteilhafte Weise sind zwischen dem mittleren Leistungsanschluss der ersten Halbbrücke und dem negativen Leistungsanschluss der dritten Halbbrücke mindestens eine dritte Freilaufdiode und zwischen dem mittleren Leistungsanschluss der zweiten Halbbrücke und dem positiven Leistungsanschluss der dritten Halbbrücke mindestens eine vierte Freilaufdiode geschaltet. Durch die Freilaufdioden wird, insbesondere um die Leistungshalbleiter zu schützen, ein Stromfluss in Gegenrichtung verhindert.

Zweckdienlicherweise weist zumindest ein abschaltbarer Leistungshalbleiter eine antiparallele Diode auf. Eine antiparallele Diode ist in Gegenrichtung parallelgeschaltet zum abschaltbarer Leistungshalbleiter geschaltet. Eine antiparallel zum abschaltbaren Leistungshalbleiter geschaltete Diode verhindert, dass, insbesondere in Gegenrichtung, eine unzulässig hohe Spannung am abschaltbaren Leistungshalbleiter anliegt.

In einer weiteren vorteilhaften Ausführungsform weist die zweite Halbleiterzelle der ersten Halbbrücke einen zum ersten Thyristor antiparallel geschalteten dritten Thyristor auf.

Der antiparallel zum ersten Thyristor geschaltete dritte Thyristor ist in Gegenrichtung parallel zum ersten Thyristor geschaltet. Eine derartige Verschaltung der beiden Thyristoren wird auch Triac-Schaltung oder bidirektionaler Thyristor genannt. Durch die Triac-Schaltung ist die zweite Halbleiterzelle der ersten Halbbrücke in beide Richtungen steuerbar. Darüber hinaus kann insbesondere in einem Gleichrichterbetrieb ein Zwischenkreis beispielsweise aus einem Netz kontrolliert vorgeladen werden.

In einer bevorzugten Ausgestaltung weist die erste Halbleiterzelle der zweiten Halbbrücke einen zum zweiten Thyristor antiparallel geschalteten vierten Thyristor auf. Durch eine derartige Triac-Schaltung ist die erste Halbleiterzelle der zweiten Halbbrücke in beide Richtungen steuerbar. Darüber hinaus kann insbesondere in einem Gleichrichterbetrieb ein Zwischenkreis beispielsweise aus einem Netz kontrolliert vorgeladen werden.

In einer bevorzugten Ausgestaltung werden die erste Halbleiterzelle der ersten Halbbrücke und die zweite Halbleiterzelle der zweiten Halbbrücke mit einer ersten Frequenz angesteuert, wobei die Thyristoren mit einer zweiten Frequenz gezündet werden und wobei die erste Frequenz größer als die zweite Frequenz ist. Insbesondere liegen die erste Frequenz im Kilohertzbereich und die zweite Frequenz im Hertzbereich. Der Aufbau des Wechselrichters kann vereinfacht werden, weil nur die Kommutierungspfade von der ersten Halbleiterzelle der ersten Halbbrücke zur ersten Halbleiterzelle der dritten Halbbrücke und von der ersten Halbleiterzelle der zweiten Halbbrücke zur zweiten Halbleiterzelle der dritten Halbbrücke niederinduktiv aufgebaut werden müssen. Durch die geringere Taktung können die zweite Halbleiterzelle der ersten Halbbrücke und die die erste Halbleiterzelle der zweiten Halbbrücke mit Thyristoren ersetzt werden.

Bevorzugt werden die erste Halbleiterzelle der ersten Halbbrücke und die zweite Halbleiterzelle der zweiten Halbbrücke mit einer Pulsweiten-Modulation angesteuert. Eine derartige Ansteuerung hat sich durch ihre einfache Realisierung und hohe Energieeffizienz als besonders vorteilhaft erwiesen.

Im Folgenden wird die Erfindung anhand der in den Figuren dargestellten Ausführungsbeispiele näher beschrieben und erläutert.

Es zeigen:
- FIG 1: ein Blockschaltbild einer Anordnung zur Speisung eines Wechselspannungs-Elektroantriebs mit einem Wechselrichter,
- FIG 2: ein Zeitablaufdiagramm einer Wechselrichterausgangsspannung,
- FIG 3: ein Schaltbild einer als NPC ausgeführten DreipunktWechselrichterschaltung mit Thyristoren,
- FIG 4: ein Schaltbild einer als NPC ausgeführten DreipunktWechselrichterschaltung mit Thyristoren und antiparallelen Dioden,
- FIG 5: ein Schaltbild einer als ANPC ausgeführten DreipunktWechselrichterschaltung mit Thyristoren und antiparallelen Dioden,
- FIG 6: ein Schaltbild einer als NPC ausgeführten Dreipunkt-Wechselrichterschaltung mit bidirektionalen Thyristoren,
- FIG 7: ein Schaltbild einer als ANPC ausgeführten Dreipunkt-Wechselrichterschaltung mit bidirektionalen Thyristoren,
- FIG 8: ein Schaltbild einer als ANPC ausgeführten Dreipunkt-Wechselrichterschaltung mit Thyristoren und einer Löschschaltung im Mittelpunktzweig,
- FIG 9: ein Schaltbild einer als dreiphasiger ANPC ausgeführten Dreipunkt-Wechselrichterschaltung mit Thyristoren,
- FIG 10: ein Fahrzeug mit Einzelradantrieb.

Gleiche Bezugszeichen haben in den verschiedenen Figuren die gleiche Bedeutung.

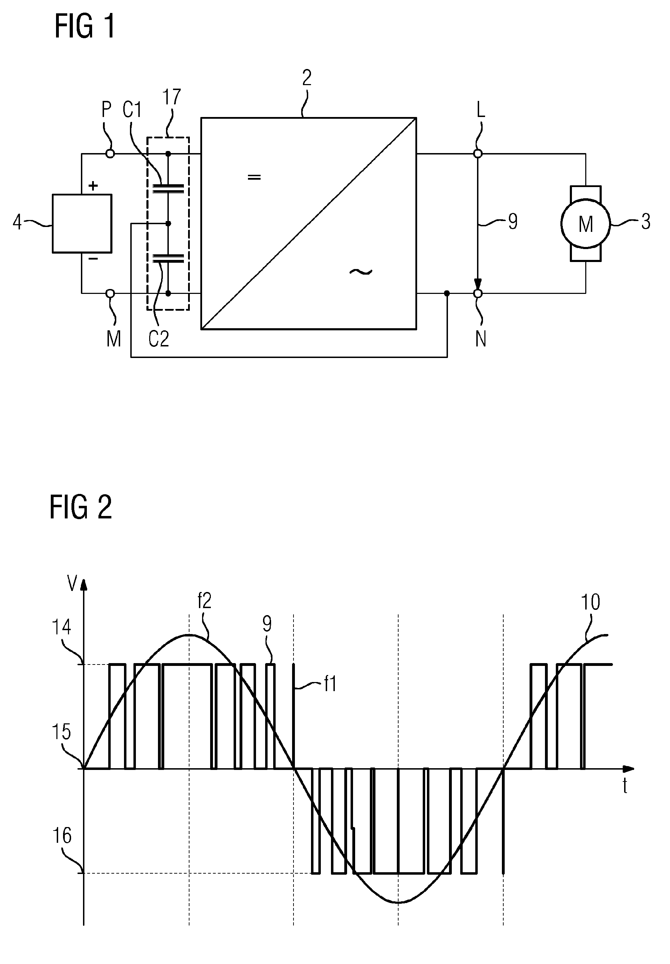

FIG 1 zeigt ein Blockschaltbild einer Anordnung zur Speisung eines Wechselspannungs-Elektroantriebs 3 mit einem Wechselrichter 2. Der Wechselrichter 2, welcher eine Wechselrichterausgangsspannung 9 ausgibt, ist exemplarisch einphasig mit einem Leiter L und einem Nullleiter N ausgeführt, kann aber auch beispielsweise dreiphasig ausgeführt sein. Die Gleichspannung wird in FIG 1 durch eine Gleichspannungs-Quelle 4 bereitgestellt. Die Gleichspannungsquelle 4 kann, neben einem Energiespeicher, insbesondere einem Akku, ein DC/DC-Steller, ein Gleichrichter oder eine andere dem Wechselrichter vorgeschaltete Komponente mit einem Gleichspannungsausgang sein. Zwischen der Gleichspannungsquelle 4 und dem Wechselrichter 2, der als Dreipunkt-Wechselrichter ausgeführt ist, befindet sich ein geteilter Zwischenkreis 17, welcher zwei in Serie geschaltete Zwischenkreiskondensatoren C1, C2 aufweist. Die Verbindung zwischen dem ersten Zwischenkreiskondensator C1 und dem zweiten Zwischenkreiskondensator C2 ist mit dem Nullleiter N verbunden. der Wechselspannungs-Elektroantrieb 3 stellt für den Wechselrichter 2 eine im Wesentlichen induktive Last dar.

FIG 2 zeigt ein Zeitablaufdiagramm einer Wechselrichterausgangsspannung 9. Es ist im Zeitablaufdiagramm die Spannung V über der Zeit t aufgetragen. Die Wechselrichterausgangsspannung 9 ist mit einer ersten Frequenz f1 pulsweitenmoduliert. Zusätzlich ist ein zugehöriger Phasenstrom 10 mit einer zweiten Frequenz f2, der Grundfrequenz, zu sehen. Charakteristisch für einen Dreipunkt-Wechselrichter ist, dass die pulsweitenmodulierte Wechselrichterausgangsspannung 9 während der positiven Halbwelle des Grundfrequenzsignals 10 alternierend Werte annimmt, die einer positiven Wechselrichterausgangsspannung 14 oder einer Nullpunktspannung 15 entsprechen und 9 während der negativen Halbwelle des Grundfrequenzsignals 10 alternierend Werte annimmt, die einer negativen Wechselrichterausgangsspannung 16 oder einer Nullpunktspannung 15 entsprechen. Die Wechselrichterausgangsspannung 9 und der zugehörige Phasenstrom 10 liegen in Phase, daher ist die vom Wechselrichter getriebene Last rein reel, also beispielsweise ein Widerstand. Wird der Wechselrichter beispielsweise zur Speisung von Spulen des Stators eines Elektroantriebs verwendet, so ist die Last im Idealfall rein induktiv und der Strom ist um -90° phasenverschoben.

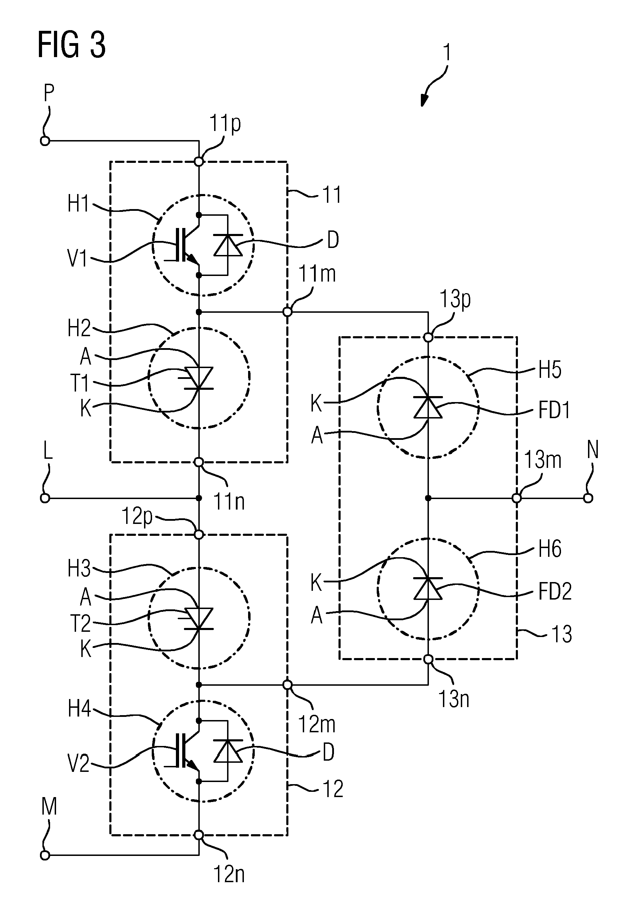

FIG 3 zeigt ein Schaltbild einer als NPC ausgeführten Dreipunkt-Wechselrichterschaltung 1 mit Thyristoren T1, T2. Die Dreipunkt-Wechselrichterschaltung 1 weist drei Halbbrücken 11, 12, 13 auf, die jeweils einen positiven Leistungsanschluss 11p, 12p, 13p, einen mittleren Leistungsanschluss 11m, 12m, 13m und einen negativen Leistungsanschluss 11n, 12n, 13n aufweisen. Die erste Halbbrücke 11 und die zweite Halbbrücke 12 sind derartig gestapelt, dass der positive Leistungsanschluss 12p der zweiten Halbbrücke 12 mit dem negativen Leistungsanschluss 11n der ersten Halbbrücke 11 verbunden ist. Die dritte Halbbrücke 13 ist als Mittelpunktpfad ausgeführt, wobei der mittlere Leistungsanschluss 11m der ersten Halbbrücke 11 mit dem positiven Leistungsanschluss 13p der dritten Halbbrücke 13 verbunden ist und der mittlere Leistungsanschluss 12m der zweiten Halbbrücke 12 mit dem negativen Leistungsanschluss 13n der dritten Halbbrücke 13 verbunden ist. Der positive Leistungsanschluss 11p der ersten Halbbrücke 11 ist mit dem Pluspol P und der negative Leistungsanschluss 12n der zweiten Halbbrücke 12 ist mit dem Minuspol M der Dreipunkt-Wechselrichterschaltung 1 verbunden. Die Verbindung zwischen dem negativen Leistungsanschluss 11n der ersten Halbbrücke 11 und dem positiven Leistungsanschluss 12p der zweiten Halbbrücke 12 ist mit dem Leiter L der Dreipunkt-Wechselrichterschaltung 1 verbunden während der mittlere Leistungsanschluss 13m der dritten Halbbrücke 13 mit dem Nullleiter N der Dreipunkt-Wechselrichterschaltung 1 verbunden ist.

Jede Halbbrücke 11, 12 13 weist eine erste Halbleiterzelle H1, H3, H5 zweite Halbleiterzelle H2, H4, H6 auf. Die erste Halbleiterzelle H1 der ersten Halbbrücke 11 weist einen ersten abschaltbaren Leistungshalbleiter V1 auf und die zweite Halbleiterzelle H4 der zweiten Halbbrücke 12 weist einen zweiten abschaltbaren Leistungshalbleiter V2 auf. Die abschaltbaren Leistungshalbleiter V1, V2 sind als IGBTs ausgeführt und weisen jeweils eine antiparallele Diode D auf, die in Gegenrichtung parallel zum jeweiligen IGBT geschaltet sind, wobei eine Kathode mit dem Kollektor und eine Anode mit dem Emitter des jeweiligen IGBTs verbunden sind. Die zweite Halbleiterzelle H2 der ersten Halbbrücke 11 weist einen ersten Thyristor T1 und die erste Halbleiterzelle H3 der zweiten Halbbrücke 12 einen zweiten Thyristor T2 auf, wobei die Kathode K des ersten Thyristors T1 mit der Anode A des zweiten Thyristors T2 verbunden ist. Die Anode des ersten Thyristors T1 ist mit dem Emitter des IGBTs der ersten Halbleiterzelle H1 der ersten Halbbrücke 11 verbunden und die Kathode des zweiten Thyristors T2 ist mit dem Kollektor des IGBTs der zweiten Halbleiterzelle H4 der zweiten Halbbrücke 12 verbunden. Die erste Halbleiterzelle H5 und die zweite Halbleiterzelle H6 der dritten Halbbrücke 13 weisen jeweils eine Freilaufdiode FD1, FD2 auf.

Für einen positiven Phasenstrom wird der erste Thyristor T1 leitend und der erste IGBT V1 wird geschaltet. Für eine, wie in FIG 2 dargestellte, positive Wechselrichterausgangsspannung 14 ist der erste IGBT V1 offen. Schaltet der erste IGBT V1 ab, so fließt der Phasenstrom 10 durch die erste Freilaufdiode FD1 und die Nullpunktspannung 15 liegt an der Last an. Bei einem Stromnulldurchgang des Phasenstromes 10 wird der erste Thyristor T1 gelöscht und wird wieder hochohmig. Für einen negativen Phasenstrom wird der zweite Thyristor T2 leitend und der zweite IGBT V2 wird geschaltet. Für eine, wie in FIG 2 dargestellte, negative Wechselrichterausgangsspannung 16 ist der erste IGBT V1 offen. Schaltet der zweite IGBT V2 ab, so fließt der Phasenstrom 10 durch die zweite Freilaufdiode FD2 und die Nullpunktspannung 15 liegt an der Last an. Bei einem Stromnulldurchgang des Phasenstromes 10 wird der zweite Thyristor T2 gelöscht und wird wieder hochohmig.

Demnach fließt in der Schaltung der Strom jeder Phase des Phasenstroms nur durch einen IGBT V1, V2 oder eine Freilaufdiode FD1, FD2 sowie durch einen Thyristor T1, T2. Da die Durchlassverluste der Thyristoren T1, T2 signifikant geringer als die der IGBTs V1, V2 oder Freilaufdioden FD1, FD2 sind, weist die in FIG 1 gezeigte Dreipunkt-Wechselrichterschaltung 1, im Vergleich zum Stand der Technik, geringere Durchlassverluste auf. Durch die Freilaufdioden FD1, FD2 ist mit der Dreipunkt-Wechselrichterschaltung 1 in FIG 3 kein Gleichrichterbetrieb möglich.

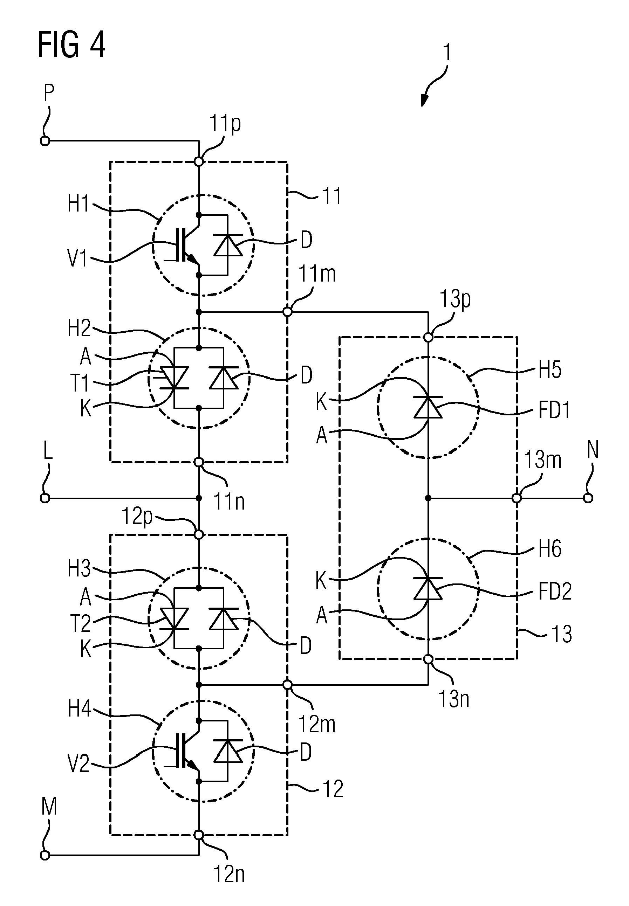

FIG 4 zeigt ein Schaltbild einer als NPC ausgeführten Dreipunkt-Wechselrichterschaltung 1 mit Thyristoren T1, T2 und antiparallelen Dioden D. Eine antiparallele Diode D ist in Gegenrichtung parallelgeschaltet. In FIG 4 sind die jeweiligen Kathoden der antiparallelen Dioden D mit den Anoden A der jeweiligen Thyristoren T1, T2 verbunden während die jeweiligen Anoden der antiparallelen Dioden D mit den Kathoden K der jeweiligen Thyristoren T1, T2 verbunden sind. Eine antiparallel geschaltete Diode D verhindert, dass, insbesondere in Gegenrichtung, eine unzulässig hohe Spannung am jeweiligen Thyristor T1, T2 anliegt. Die weitere Ausführung der Dreipunkt-Wechselrichterschaltung 1 entspricht der aus FIG 3.

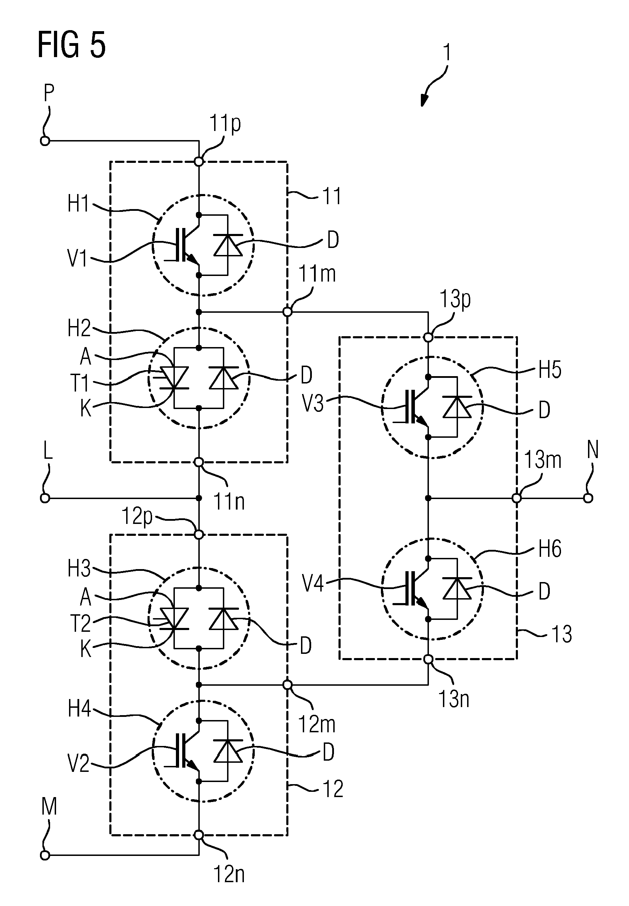

FIG 5 zeigt ein Schaltbild einer als ANPC ausgeführten Dreipunkt-Wechselrichterschaltung 1 mit Thyristoren T1, T2 und antiparallelen Dioden D. Die Halbleiterzellen H5, H6 der als ANPC ausgeführten Dreipunkt-Wechselrichterschaltung 1 sind als abschaltbaren Leistungshalbleiter V3, V4 mit antiparallelen Dioden D ausgeführt, wobei die abschaltbaren Leistungshalbleiter V3, V4 exemplarisch als IGBTs ausgeführt sind. Durch die abschaltbaren Leistungshalbleiter V3, V4 ist die in FIG 5 gezeigte Dreipunkt-Wechselrichterschaltung 1 auch im Gleichrichterbetrieb verwendbar.

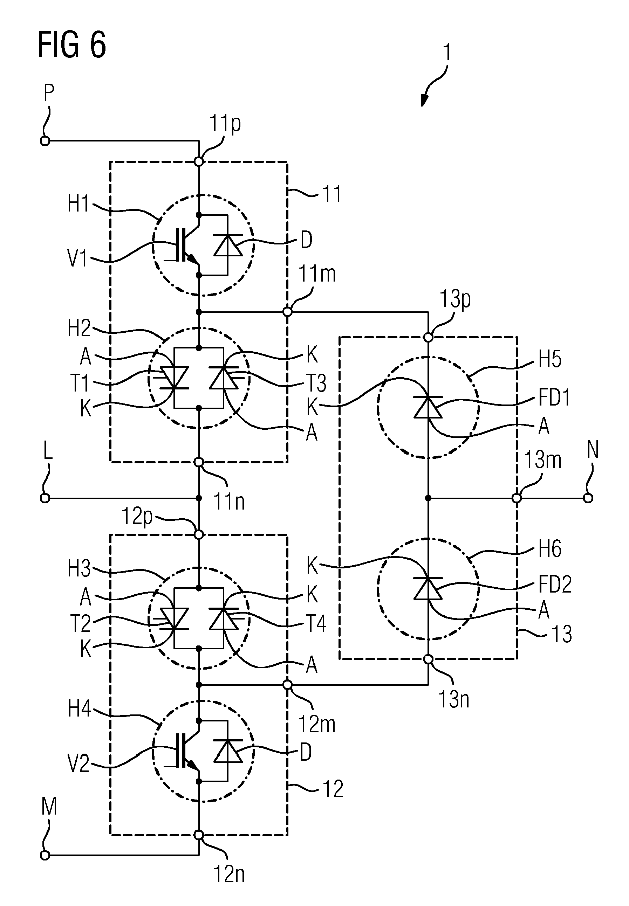

FIG 6 zeigt ein Schaltbild einer als NPC ausgeführten Dreipunkt-Wechselrichterschaltung 1 mit bidirektionalen Thyristoren T1, T3; T2, T4. In einer weiteren vorteilhaften Ausführungsform weist die zweite Halbleiterzelle der ersten Halbbrücke einen zum ersten Thyristor antiparallel geschalteten dritten Thyristor auf. Hierbei sind ein dritter Thyristor T3 antiparallel zum ersten Thyristor T1 geschaltet und ein vierter Thyristor T4 antiparallel zum zweiten Thyristor T2 geschaltet. Eine derartige Beschaltung der jeweiligen Thyristorpaare T1, T3; T2, T4 wird auch Triac-Schaltung oder bidirektionaler Thyristor genannt. Durch die Triac-Schaltungen sind die zweite Halbleiterzelle H2 der ersten Halbbrücke 11 und die erste Halbleiterzelle H3 der zweiten Halbbrücke 12 in beide Richtungen steuerbar. Die weitere Ausführung der Dreipunkt-Wechselrichterschaltung 1 entspricht der aus FIG 3.

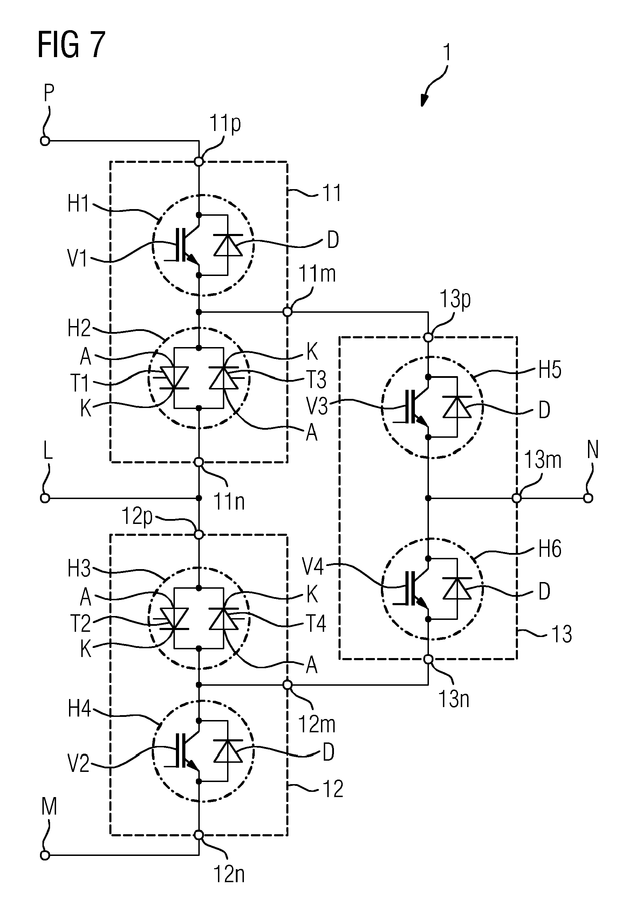

FIG 7 zeigt ein Schaltbild einer als ANPC ausgeführten Dreipunkt-Wechselrichterschaltung mit bidirektionalen Thyristoren T1, T3; T2, T4. Die Halbleiterzellen H5, H6 der in FIG 7 gezeigten Dreipunkt-Wechselrichterschaltung 1 sind als abschaltbare Leistungshalbleiter V3, V4 mit antiparallelen Dioden D ausgeführt, wobei die abschaltbaren Leistungshalbleiter V3, V4 exemplarisch als IGBTs ausgeführt sind. Die weitere Ausführung der Dreipunkt-Wechselrichterschaltung 1 entspricht der aus FIG 6. Durch die Triac-Schaltungen kann in einem Gleichrichterbetrieb ein Zwischenkreis 17, beispielsweise aus einem Netz, kontrolliert vorgeladen werden.

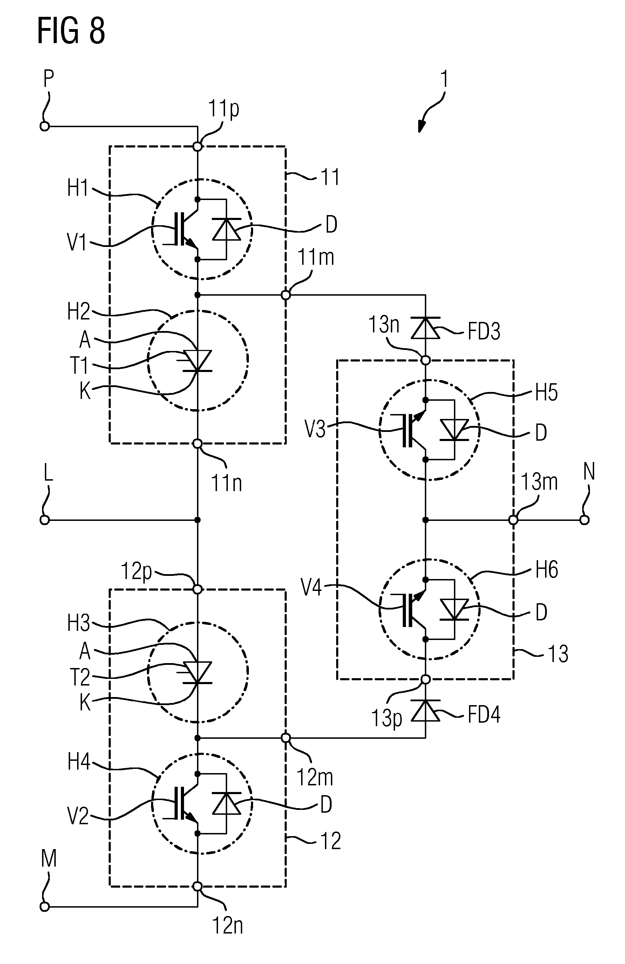

FIG 8 zeigt ein Schaltbild einer als ANPC ausgeführten Dreipunkt-Wechselrichterschaltung 1 mit Thyristoren T1, T2 und einer Löschschaltung im Mittelpunktzweig. Die Löschschaltung weist abschaltbare Leistungshalbleiter V3, V4 auf, welche in Gegenrichtung zu den Halbleiterzellen H1, H2 der ersten Halbbrücke 11 und zu den Halbleiterzellen H3, H4 der zweiten Halbbrücke 12 geschaltet sind. Durch die exemplarisch als IGBTs ausgeführten abschaltbare Leistungshalbleiter V3, V4 können die Thyristoren T1, T2 gezielt abgeschaltet werden. Liegen Strom und die Spannung eines sinusförmigen Ausgangssignals nicht in Phase kann der jeweilige Thyristor nicht durch einen Stromnulldurchgang des sinusförmigen Ausgangssignals gelöscht werden und die Thyristoren können durch die gezeigte Löschschaltung in einen hochohmigen Zustand versetzt werden. Die weitere Ausführung der Dreipunkt-Wechselrichterschaltung 1 entspricht der aus FIG 4.

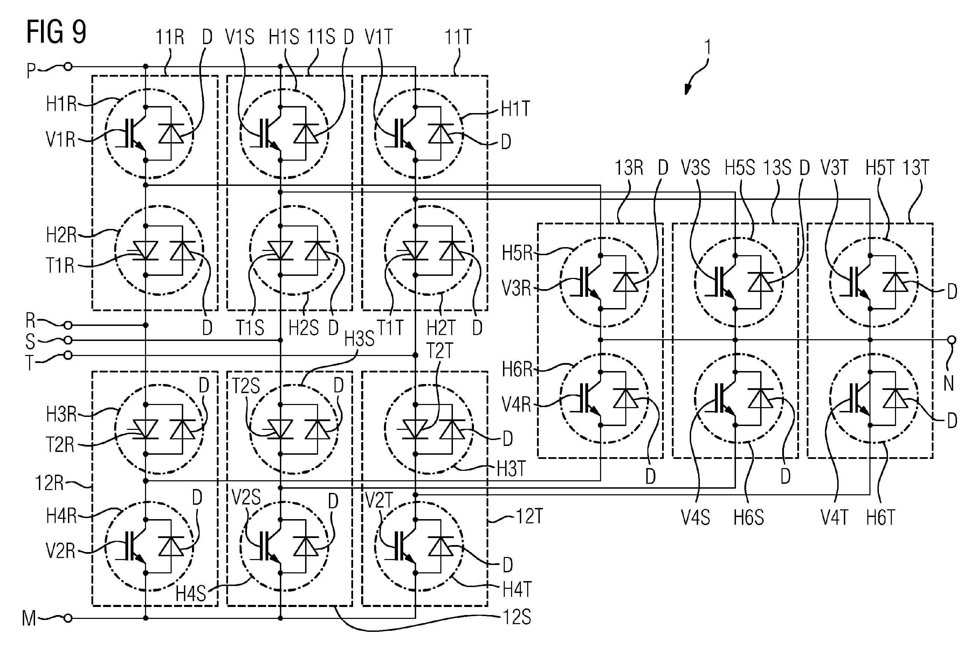

FIG 9 zeigt ein Schaltbild einer als dreiphasiger ANPC ausgeführten Dreipunkt-Wechselrichterschaltung 1 mit Thyristoren T1R, T1S, T1T, T2R, T2S, T2t. Jede der exemplarisch gewählten drei Phasen R, S, T der dreiphasig ausgeführten Wechselrichterschaltung entspricht der Ausführung aus FIG 5. Die Dreipunkt-Wechselrichterschaltung 1 kann ebenfalls zweiphasig ausgeführt sein. Durch die abschaltbaren Leistungshalbleiter V3R, V3S, V3T, V4R, V4S, V4T ist die in FIG 5 gezeigte Dreipunkt-Wechselrichterschaltung 1 auch im Gleichrichterbetrieb verwendbar.

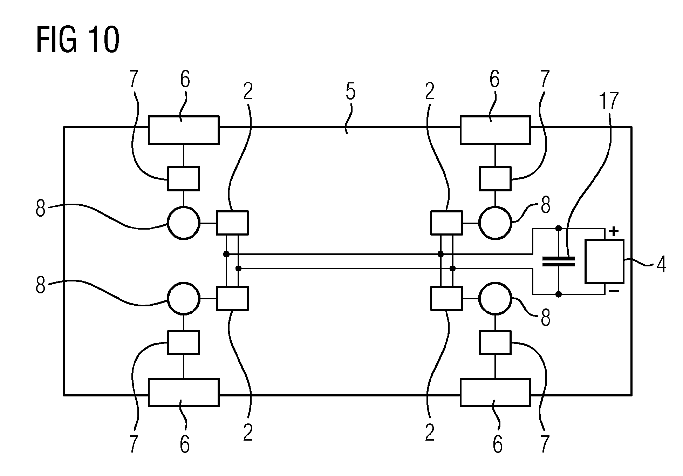

FIG 10 zeigt ein Fahrzeug 5 mit Einzelradantrieb. Das Fahrzeug 5 weist exemplarisch vier Einzelräder 6 auf, welche jeweils über ein Getriebe 7 mit je einer elektrischen rotierenden Maschine 8 verbunden sind. In einem Normalbetrieb wird die elektrische rotierende Maschine 8 als Antrieb für das Fahrzeug 5 genutzt, sie kann aber auch in einem Rückspeisebetrieb als Generator genutzt werden. Die elektrische rotierende Maschine 8 kann einphasig oder mehrphasig ausgeführt sein und ist bevorzugt dreiphasig ausgebildet. Jede elektrische rotierende Maschine 8 wird über einen Wechselrichter 2 gespeist, welcher an einen gemeinsamen Zwischenkreis 17 angeschlossen ist. Eine Gleichspannungs-Quelle 4 ist vor dem Zwischenkreis 17 geschaltet. Die Gleichspannungsquelle 4 kann, neben einem Energiespeicher oder einem Stromnetz, ein DC/DC-Steller, ein Gleichrichter oder eine andere dem Wechselrichter vorgeschaltete Komponente mit einem Gleichspannungsausgang sein.

## Patentansprüche

1. Dreipunkt-Wechselrichterschaltung (1) aufweisend zwei gestapelte Halbbrücken (11, 12),
wobei ein mittlerer Leistungsanschluss (11m) der ersten Halbbrücke (11) an einen positiven Leistungsanschluss (13p) einer dritten Halbbrücke (13) angeschlossen ist,
wobei ein mittlerer Leistungsanschluss (12m) der zweiten Halbbrücke (12) an einen negativen Leistungsanschluss (13n) der dritten Halbbrücke (13) angeschlossen ist,
wobei die Halbbrücken (11, 12, 13) jeweils eine erste Halbleiterzelle (H1, H3, H5) und eine zweite Halbleiterzelle (H2, H4, H6) aufweisen,
**dadurch gekennzeichnet, dass**
die zweite Halbleiterzelle (H2) der ersten Halbbrücke (11) mindestens einen ersten Thyristor (T1) aufweist und
die erste Halbleiterzelle (H3) der zweiten Halbbrücke (12) mindestens einen zweiten Thyristor (T2) aufweist.

2. Dreipunkt-Wechselrichterschaltung (1) nach Anspruch 1,
wobei die Thyristoren (T1, T2) jeweils eine Kathode (K) und eine Anode (A) aufweisen,
wobei die Kathode (K) des ersten Thyristors (T1) mit der Anode (A) des zweiten Thyristors (T2) verbunden ist.

3. Dreipunkt-Wechselrichterschaltung (1) nach einem der Ansprüche 1 oder 2,
wobei die erste Halbleiterzelle (H1) der ersten Halbbrücke (11) und die zweite Halbleiterzelle (H4) der zweiten Halbbrücke (12) jeweils mindestens einen abschaltbaren Leistungshalbleiter (V1, V2), insbesondere einen IGBT, aufweisen.

4. Dreipunkt-Wechselrichterschaltung (1) nach einem der vorherigen Ansprüche,
wobei die Halbleiterzellen (H5, H6) der dritten Halbbrücke (13) jeweils mindestens eine Freilaufdiode (FD1, FD2) aufweisen.

5. Dreipunkt-Wechselrichterschaltung (1) nach einem der Ansprüche 1 bis 3,
wobei die Halbleiterzellen (H5, H6) der dritten Halbbrücke (13) jeweils mindestens einen abschaltbaren Leistungshalbleiter (V3, V4), insbesondere einen IGBT, aufweisen.

6. Dreipunkt-Wechselrichterschaltung (1) nach Anspruch 4,
wobei die abschaltbaren Leistungshalbleiter (V3, V4) in Gegenrichtung zu den Halbleiterzellen (H1, H2) der ersten Halbbrücke (11) und zu den Halbleiterzellen (H3, H4) der zweiten Halbbrücke (12) geschaltet sind.

7. Dreipunkt-Wechselrichterschaltung (1) nach Anspruch 5,
wobei zwischen dem mittleren Leistungsanschluss (11m) der ersten Halbbrücke (11) und dem negativen Leistungsanschluss (13n) der dritten Halbbrücke (13) mindestens eine dritte Freilaufdiode (FD3) geschaltet ist und
wobei zwischen dem mittleren Leistungsanschluss (12m) der zweiten Halbbrücke (12) und dem positiven Leistungsanschluss (13p) der dritten Halbbrücke (13) mindestens eine vierte Freilaufdiode (FD4) geschaltet ist.

8. Dreipunkt-Wechselrichterschaltung (1) nach einem der Ansprüche 3 bis 7,
wobei zumindest ein abschaltbarer Leistungshalbleiter (V1, V2, V3, V4) eine antiparallele Diode (D) aufweist.

9. Dreipunkt-Wechselrichterschaltung (1) nach einem der vorherigen Ansprüche,
wobei die zweite Halbleiterzelle (H2) der ersten Halbbrücke (11) einen zum ersten Thyristor (T1) antiparallel geschalteten dritten Thyristor (T3) aufweist

10. Dreipunkt-Wechselrichterschaltung (1) nach einem der vorherigen Ansprüche,
wobei die erste Halbleiterzelle (H3) der zweiten Halbbrücke (12) einen zum zweiten Thyristor (T2) antiparallel geschalteten vierten Thyristor (T4) aufweist.

11. Wechselrichter (2) mit mindestens einer Dreipunkt-Wechselrichterschaltung (1) nach einem der Ansprüche 1 bis 10.

12. Fahrzeug (5), insbesondere ein Schienenfahrzeug, mit mindestens einem Wechselrichter nach Anspruch 11.

13. Verfahren zum Ansteuern einer Dreipunkt-Wechselrichterschaltung (1) nach einem der Ansprüche 1 bis 10.

14. Verfahren nach Anspruch 13,
wobei die erste Halbleiterzelle (H1) der ersten Halbbrücke (11) und die zweite Halbleiterzelle (H4) der zweiten Halbbrücke (12) mit einer ersten Frequenz (f1) angesteuert werden, wobei die Thyristoren (T1, T2) mit einer zweiten Frequenz (f2) gezündet werden und
wobei die erste Frequenz (f1) größer als die zweite Frequenz (f2) ist.

15. Verfahren nach einem der Ansprüche 13 oder 14,
wobei die erste Halbleiterzelle (H1) der ersten Halbbrücke (11) und die zweite Halbleiterzelle (H4) der zweiten Halbbrücke (12) mit einer Pulsweiten-Modulation angesteuert werden.
